# EUROPÄISCHE PATENTSCHRIFT

(11) **EP 0 906 519 B1**
(45) Veröffentlichungstag und Bekanntmachung des Hinweises auf die Patenterteilung: **02.10.2002**
(21) Anmeldenummer: 97928231.6
(22) Anmeldetag: 18.06.1997
(51) Int. Cl.: F16D 11/10

(54) **KLAUENVERZAHNUNG FÜR SCHALTGETRIEBE ODER DGL.**
CLAW TOOTHING FOR A GEARBOX OR THE LIKE
DENTURE A CRABOTS POUR BOITE DE VITESSES OU SIMILAIRE

(30) Priorität: 21.06.1996 DE 19624772
(43) Veröffentlichungstag der Anmeldung: 07.04.1999
(73) Patentinhaber: BLW PRÄZISIONSSCHMIEDE GmbH, 80807 München (DE)
(72) Erfinder: GUTMANN, Peter, D-81927 München (DE); TAUSCHEK, Georg, D-81885 München (DE)
(74) Vertreter: Grättinger & Partner (GbR)
(86) Internationale Anmeldenummer: EP9703174
(87) Internationale Veröffentlichungsnummer: WO97049933

(56) Entgegenhaltungen:
- CH-A- 347 390
- DE-A- 19 514 349
- DE-B- 2 052 244
- DE-C- 599 714
- GB-A- 2 081 822
- US-A- 3 550 738
- PATENT ABSTRACTS OF JAPAN vol. 008, no. 182 (M-319), 22.August 1984 & JP 59 073627 A (SANSHIN KOGYO KK;OTHERS: 01), 25.April 1984,

## Beschreibung

Die Erfindung betrifft eine Klauenverzahnung für Schaltgetriebe oder dergleichen, deren Klauen mit Hinterstellung ausgebildete Seitenflanken aufweisen und, im Querschnitt zur Klauenlängsachse gesehen, eine ebene oder konvexe Dachform aufweisen.

Derartige Klauenverzahnungen, insbesondere bei Schaltmuffen und Gangrädern in Kraftfahrzeuggetrieben, unterliegen einem hohen Verschleiß. Die Dachform der Klauen, welche für den ersten Kontakt während der Einspurphase eine besondere Rolle spielt, ist daher so zu gestalten, daß der Eingriff rasch und möglichst reibungslos abläuft. Außerdem wird die Qualität einer Klauenverzahnung maßgeblich von der Gestaltung der Seitenflanken bestimmt; dadurch, daß die Seitenflanken eine Hinterschneidung bilden, wird ein sicherer Eingriff gewährleistet.

Aus der US-PS 3550738 ist eine Synchronisierungsklauenkupplung bekannt, bei welcher einzelnen Klauenelemente nockenförmig vorspringen. Dadurch wird ein Schalten bei hohen Geschwindigkeiten möglich, ohne einen bei herkömmlichen Kupplungen auftretenden Kantenverschleiß an den Klauen zu bewirken. Die bekannten Klauen besitzen nach Fig. 4, 5; 8, 9 bzw. 12, 13 dieser US-PS 3550738 Seitenflanken mit leichten Hinterstellungen sowie eine im Querschnitt zur Klauenlängsachse gesehen eben oder konvex verlaufende Dachform. Die Grundrißform der Klauen ist dabei mit Verjüngung zur Drehachse der Klauenverzahnung hin zusammenlaufend und die Erzeugenden der Klauenform in Klauenlängsrichtung sind Geraden, die im Bereich der Seitenflanken entsprechend dieser Keilform verlaufen.

Außerdem ist eine schnell und reibungsarm ansprechende Kraftfahrzeugkupplung bekannt (US-PS 5524738), deren Klauen mit Hinterstellungen der beiden Flanken ausgebildet sind; die Klauen weisen im Querschnitt zur Klauenlängsachse gesehen eine ebene oder konvexe Dachform auf. Auch hier ist die Grundrißform der Klauen mit Verjüngung zur Drehachse der Klauenverzahnung hin keilförmig zusammenlaufend und die Erzeugenden der Klauenform sind zumindest im Bereich der Seitenflanken in Klauenlängsrichtung durch Geraden gebildet, die entsprechend der Keilform verlaufen. Hierdurch soll ein Schalten bei hohen Drehzahlen mit geringem Verschleiß möglich sein.

Der vorliegenden Erfindung liegt die Aufgabe zugrunde, eine derartige Klauenverzahnung in dem Sinne zu verbessern, daß bei Erhaltung einer für die Herstellung einfachen Klauenform der Kontakt beim Einspuren besonders weich ist und daß der für die Übertragung des Drehmoments maßgebliche Eingriffszeitpunkt frühzeitig unter Verwirklichung einer großen Eingriffsfläche erzielt wird, wobei insgesamt die Standzeit der Klauenverzahnung verbessert werden soll.

Diese Aufgabe wird bei einer Klauenverzahnung der eingangs genannten Art dadurch gelöst, daß die Grundrißform der Klauen mit Verjüngung zur Drehachse der Klauenverzahnung hin keilförmig zusammenlaufend ist, daß die Erzeugenden der Dachform und der Seitenflanken in Klauenlängsrichtung Geraden sind, die durch die Drehachse verlaufen.

Bei dieser Klauenform, im folgenden "Wendelklaue" genannt, bilden die Erzeugenden für den Klauenumriß eine Wendelfläche bzw. eine Schraubenfläche, d.h. die Erzeugenden verlaufen in Form radialer Geraden in unterschiedlichen Höhen durch die Drehachse und sind gegeneinander verschraubt, d.h. anders als bei den bekannten Klauenformen beschreibt die Seitenflanke bei der Wendelklaue keine Ebene mehr, sondern eine Wendelfläche.

Bevorzugt setzt sich die Wendelfläche auch im Bereich der Dachform fort, so daß entsprechend der gegenseitigen Verdrehung der beiden Verzahnungspartner im Bereich der Dachform der Kontakt zwischen zwei Klauen auf eine Linie reduziert ist, d.h. der Einspurwiderstand ist besonders gering. Ähnliche Verhältnisse lassen sich bei anderen Klauenformen dadurch verwirklichen, daß die Dachform quer zur Längsebene der jeweiligen Klaue konvex ausgebildet ist, also bspw. eine teilkreisförmige oder elliptische oder in ähnlicher Weise gewölbte Form aufweist.

Derart ballige Dachformen und entsprechend gewendelte Seitenflanken bei Klauenverzahnungen können herstellungstechnisch durch spezielle Umformverfahren des Warm- und Kaltkalibrieens verwirklicht werden. Sie eignen sich insbesondere für Schaltgetriebe in Kraftfahrzeugen, wo es neben einer hohen Standfestigkeit wesentlich auf die Leichtgängigkeit der Schaltung ankommt.

Für die Funktion der erfindungsgemäßen Klauenverzahnung ist es nicht erforderlich, daß alle Klauen eine besondere, z.B. ebene oder konvexe Dachform aufweisen. Es wird im allgemeinen genügen, nur eine Teilmenge der Klauen mit einer besonderen Dachform zu versehen; in diesem Fall ist es allerdings erforderlich, daß die Klauen dieser Teilmenge um einen Überhöhungsbetrag höher ausgebildet sind als die restlichen Klauen. Die Höhe der Dachform kann dabei ganz oder teilweise dem Überhöhungsbetrag entsprechen.

Beispielsweise genügt es, wenn nur jede zweite Klaue bei einem Partner einer Klauenverzahnung mit einer überhöhten Dachform versehen ist. Die überhöhten Klauen sorgen für einen reduzierten Kontakt zwischen den beiden Partnern einer Klauenverzahnung im Moment des Einspurvorgangs und erleichtern somit das Schalten der Gänge. Je mehr Klauen gleichzeitig aufeinandertreffen, d.h. je mehr Klauen eine das Einspuren verbessernde Dachform aufweisen, desto mehr verlängert sich die Standzeit der Verzahnung allerdings gegen Inkaufnahme eines zunehmenden Einspurwiderstands.

Erst wenn alle Klauen mit einer besonderen Dachform versehen sind, kommt es nicht mehr auf deren Überhöhung an; maßgeblich ist dann nur noch die Gestaltung der Klauenform bzw. der Dachform derart, daß die Kontaktfläche zwischen den aufeinandertreffenden Klauen im Moment des Einspurvorgangs minimiert ist, und daß die Verdrehungstendenz bis zur Verwirklichung des drehmomentübertragenden Flankeneingriffs optimal ist.

Während im Bereich der Dachform eine Linienberührung zwischen den beim Einspuren aufeinandertreffenden Klauen angestrebt wird, kommt für den Flankeneingriff der Klauen sinnvollerweise nur eine Flächenberührung in Frage.

Das Einspurverhalten wird zusätzlich noch dadurch verbessert, daß in an sich bekannter Weise ein umlaufender, die Unterkante der Dachform bildender Höhenabschnitt als Abflachung, in der Fachsprache auch unter dem Namen "Flat" bekannt, ausgebildet ist.

Im folgenden wird die Erfindung anhand der Zeichnung erläutert. Es zeigt
- Fig. 1: einen Ausschnitt aus einer Klauenverzahnung mit drei verschiedenen Klauenformen, in perspektivischer Darstellung,
- Fig. 2: im halben Längsschnitt eine Wendelklaue mit ebener Dachform und Flat,
- Fig. 3: einen Halbschnitt gemäß Fig. 2 durch eine Wendelklaue mit seitlich abgeschrägter Dachform,
- Fig. 4: einen Halbschnitt gemäß Fig. 2 durch eine Wendelklaue mit giebelförmiger Dachform,
- Fig. 5: einen Halbschnitt gemäß Fig. 2 durch eine Wendelklaue mit seitlich abgerundeter Dachform,
- Fig. 6: einen Halbschnitt gemäß Fig. 2 durch eine Wendelklaue mit ovaler Dachform und
- Fig. 7: eine komplettierte Wendelklaue gemäß Fig. 6.

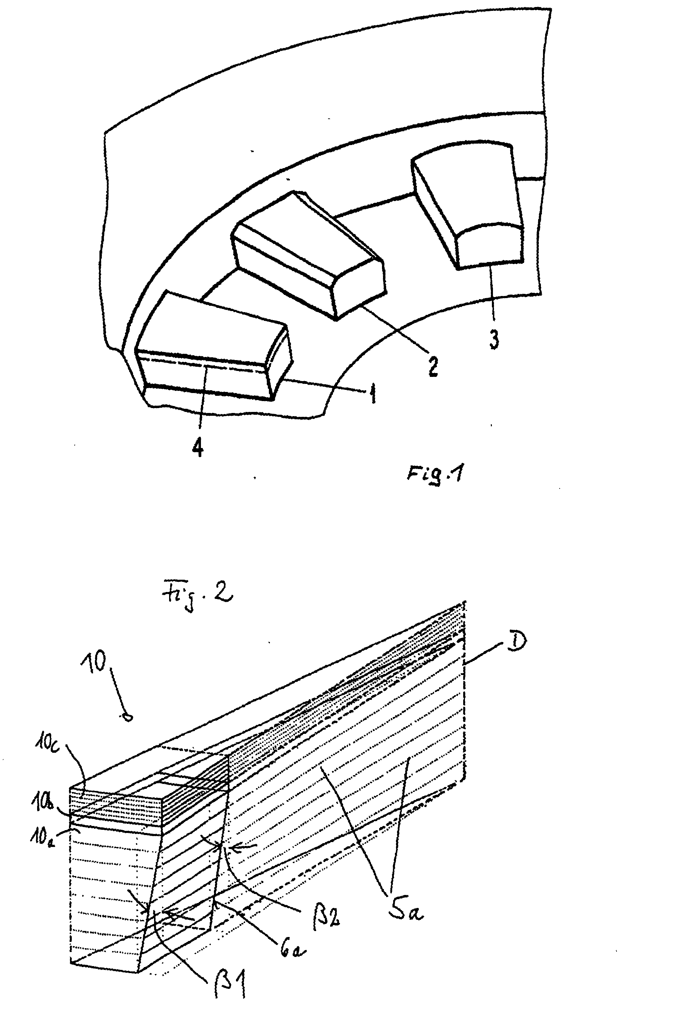

Fig. 1 zeigt einen Ausschnitt aus dem Verzahnungsbereich einer Klauenverzahnung mit drei verschiedenen Klauenformen, nämlich eine Klaue 1 mit einer ebenen Dachform, eine Klaue 2 mit einer seitlich abgeschrägten, ebenen Dachform und eine Klaue 3 mit einer konvex gerundeten Dachform. Die drei verschiedenen Klauenformen an einem Verzahnungskörper dienen lediglich dem Zweck der Demonstration, da unterschiedliche Klauenformen am selben Verzahnungskörper nicht sinnvoll erscheinen, jedenfalls dann nicht, wenn, wie hier dargestellt, die Klauen gleich hoch sind. Denkbar wäre allerdings eine Kombination aus ebenen Klauen 1, z.B. mit einer Höhe gemäß der strichlierten Linie 4, und einer weiteren Klauenform, z.B. gemäß der Klaue 2 mit seitlich abgeschrägter Dachform oder der Klaue 3 mit gerundeter Dachform, wobei die Dachformen jeweils gegenüber der ebenen Klaue 1 überhöht sind. Zweckmäßig könnte ein solcher Klauenkörper abwechselnd eine ebene Klaue ohne Überhöhung und eine Klaue mit überhöhter Dachform aufweisen.

Gemäß Fig. 1 sind die verschiedenen Klauenformen verhältnismäßig vergröbert dargestellt, d.h. es ist weder die Hinterstellung der Seitenflanke erkennbar, noch ist der Übergang zwischen dem eigentlichen Grundkörper der Klaue und ihrer Dachform gezeichnet.

Fig. 2 beschreibt eine sogenannte Wendelklaue 10, in der Darstellung als Halbprofil. Hier schneiden sich sämtliche Erzeugenden der Seitenflanke 6a in der gedachten Drehachse D, d.h. die Erzeugenden 5a werden gebildet durch Gerade, welche gegenüber der Drehachse D verschraubt sind. Das bedeutet, daß die Hinterstellung der Seitenflanke 6a in radialer Richtung zur Drehachse D gesehen abnimmt, d.h. der Hinterstellungswinkel ß1 in der stirnseitigen Ebene der Wendelklaue 10 ist größer als der Hinterstellungswinkel β2 in der Ebene ihrer Rückseite. Insgesamt betrachtet stellt die Seitenflanke 6a eine Schraubenfläche dar, deren Erzeugenden entsprechend der Gesetzmäßigkeit einer Schraubenfläche gerade Linien durch die Drehachse sind, deren Verdrehwinkel, bezogen auf einem bestimmten Höhenschritt, konstant ist. Demzufolge werden alle Kanten der Wendelklaue 10 durch gerade Linien begrenzt. Es wurde eine Klauenform mit Klauenkörper 10a, Flat 10b und ebener Dachform 10c gewählt.

Zur Verdeutlichung der Darstellung sind die Erzeugenden 5a jeweils bis zur Drehachse D durchgezogen, so daß man die Gesetzmäßigkeit ihres Verlaufs leicht erkennen kann.

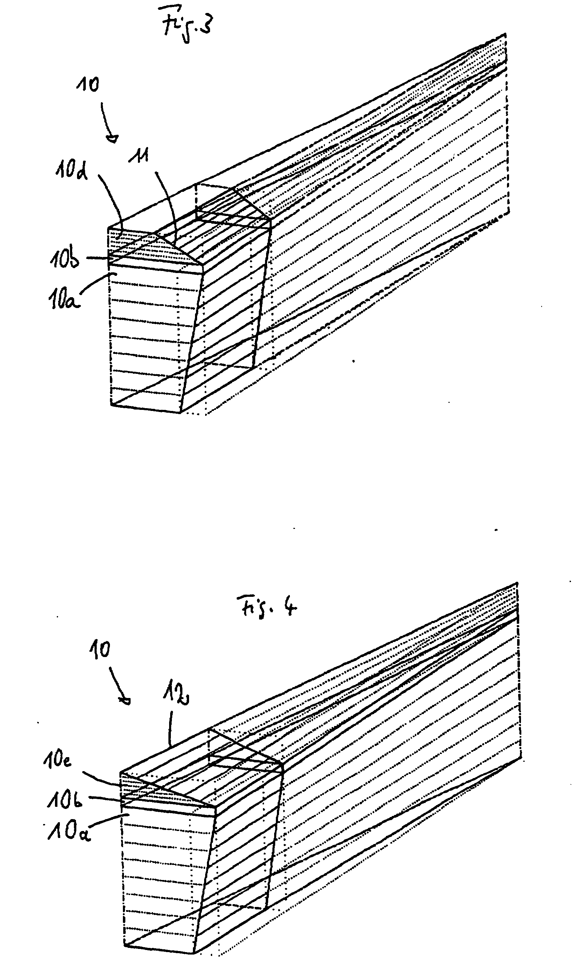

Die folgenden Fig. 3 bis 7 haben gemeinsam, daß sie eine Wendelklaue 10 mit jeweils gleichem Grundkörper 10a, gleichem Flat 10b, aber unterschiedlichen Dachformen zeigen.

Bei Fig. 3 handelt es sich um eine ebene Dachform10d mit seitlicher Schräge 11.

Bei Fig. 4 handelt es sich um eine giebelförmige Dachform 10e. Die beiden Dachschrägen schneiden sich entlang der Linie 12 in der Mittellängsebene der Wendelklaue 10. Gezeigt ist auch hier wiederum nur eine Hälfte der Wendelklaue 10; die andere Hälfte ist zur Vereinfachung der Darstellung weggelassen. Allerdings sind auch derartige Halbklauenformen durchaus als gültige Klauenform vorstellbar, z.B. bei Getrieberädern, die bloß in einer Drehrichtung belastet werden.

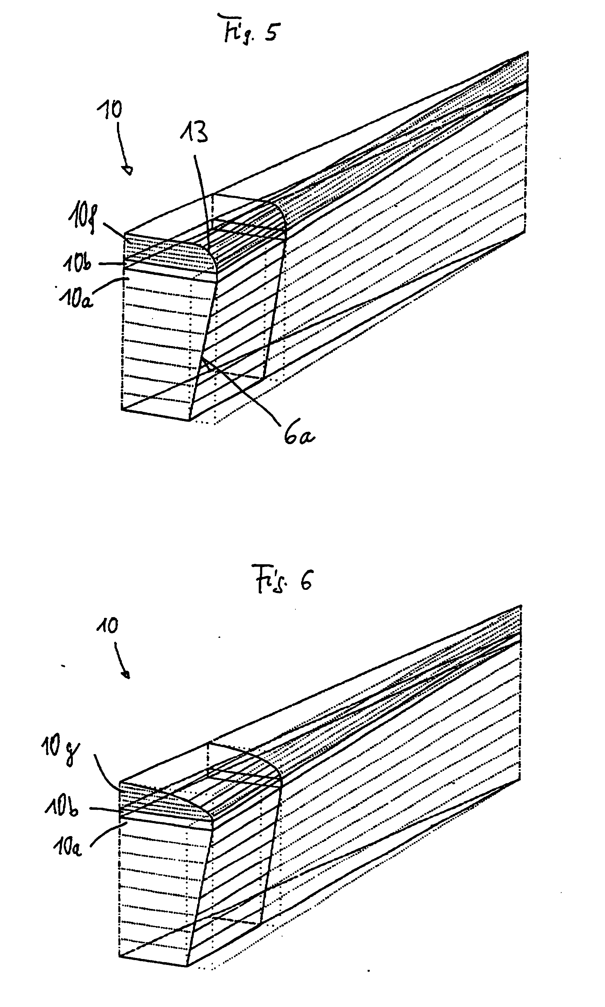

Gemäß Fig. 5 besitzt die Wendelklaue 10 wiederum eine Flachdachform 10f, welche zur Seitenflanke 6 hin eine Rundung 13 aufweist.

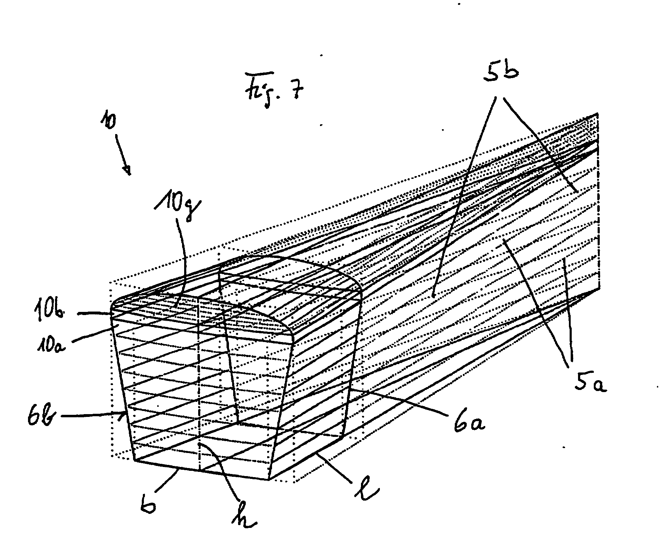

Die Wendelklaue 10 gemäß Fig. 6 besitzt eine ovale Dachform 10g, aufgesetzt auf einer Flat 10b, letztere aufgesetzt auf einem Grundkörper 10a, welcher wiederum identisch ist mit der Form des Grundkörpers gemäß den Fig. 2 bis 6.

Während Fig. 6 wiederum nur eine halbe, in der Längsmittelebene geschnittene Wendelklaue zeigt, wird gemäß Fig. 7 die selbe Klaue, jedoch komplett dargestellt. Hier sind sowohl die Erzeugenden 5a der Seitenflanke 6a als auch die Erzeugenden 5b der hinterstellten gegenüberliegenden Seitenflanke 6b eingezeichnet. Die Dachform 10g wird durch ein halbes Oval gebildet, welches speziell die Form einer Ellipse haben kann.

Man kann sich anhand der Fig. 7, welche eine zur Mittellängsebene der halben Klaue gemäß Fig. 6 symmetrische Ergänzung darstellt, ohne weiteres vorstellen, daß die Darstellungen zu den Fig. 2 bis 5 ensprechend zu einer kompletten Klauenform zu vervollständigen sind. Je nach der am fertigen Zahnrad gewünschten Klauenart und Klauenform bestimmen sich die Abmessungen der jeweiligen Grundkörper hinsichtlich ihrer Höhe h, ihrer Breite b und ihrer radialen Länge l.

## Patentansprüche

1. Klauenverzahnung für Schaltgetriebe oder dergleichen, deren Klauen mit Hinterstellung ausgebildete Seitenflanken aufweisen und, im Querschnitt zur Klauenlängsachse gesehen, eine ebene oder konvexe Dachform aufweisen,
**dadurch gekennzeichnet,**
**daß** die Grundrißform der Klauen (1; 2; 3; 10) mit Verjüngung zur Drehachse (D) der Klauenverzahnung hin keilförmig zusammenlaufend ist, daß die Erzeugenden (5a, 5b) der Dachform und der Seitenflanken in Klauenlängsrichtung Geraden sind, die durch die Drehachse (D) verlaufen.

2. Klauenverzahnung nach Anspruch 1,
**dadurch gekennzeichnet,**
**daß** die Dachform (10e) einen Drei- oder Mehreckgiebel beschreibt.

3. Klauenverzahnung nach Anspruch 1,
**dadurch gekennzeichnet,**
**daß** die Dachform (10g), quer zur Klauenlängsachse gesehen, eine Halbellipse oder eine Rechteckform ggfs. mit seitlicher Abrundung beschreibt.

4. Klauenverzahnung nach Anspruch 1,
**dadurch gekennzeichnet,**
**daß** eine Teilzahl der Klauen eines Partners der Klauenverzahnung um einen Überhöhungsbetrag höher ausgebildet ist als die restlichen Klauen.

5. Klauenverzahnung nach Anspruch 4,
**dadurch gekennzeichnet,**
**daß** jede zweite Klaue höher ausgebildet ist.

6. Klauenverzahnung nach Anspruch 4,
**dadurch gekennzeichnet,**
**daß** die Höhe der Dachform ganz oder teilweise dem Überhöhungsbetrag entspricht.

7. Klauenverzahnung nach Anspruch 1,
**dadurch gekennzeichnet,**
**daß** ein umlaufender, die Unterkante der Dachform bildender Höhenabschnitt als Abflachung ( 8b, 9b, 10b) ausgebildet ist.

## Claims

1. Claw toothing for a gearbox or the like, having claws with side flanks with a relief and, looking at a cross section to the longitudinal axis of the claw, a prismatic contour with a flat or convex top face, **characterised in that** the plan view outline of the claws (1; 2; 3; 10) with a taper is converging to the axis of rotation (D) of the claw toothing in the form of a wedge, that the generators (5a, 5b) of the prismatic contour and the side flanks are straight lines in the longitudinal direction of the claws, which run through the axis of rotation (D).

2. Claw toothing according to Claim 1, **characterised in that** the prismatic contour (10e) describes a three or multi-corner gable.

3. Claw toothing according to Claim 1, **characterised in that** the prismatic contour (10g) describes a semi-ellipse or a rectangle, possibly rounded on the side.

4. Claw toothing according to Claim 1, **characterised in that** a number of claws mating with the claw toothing are higher by a specific increment rise than the remaining claws.

5. Claw toothing according to Claim 4, **characterised in that** every second claw is higher.

6. Claw toothing according to Claim 4, **characterised in that** the height of the prismatic contour is wholly or partly equivalent to the increment rise.

7. Claw toothing according to Claim 1, **characterised in that** a height section forming the bottom edge of the prismatic contour all round is in the form of a flat (8b, 9b, 10b).

## Revendications

1. Denture de crabot pour changement de vitesses ou similaire, dont les dents présentent des flancs latéraux en contre-dépouille et, vu en coupe transversale par rapport à l'axe longitudinal de dent, une tête en forme de toit plat ou convexe, **caractérisée en ce que** le profil de base des dents (1 ; 2 ; 3 ; 10) se rétrécit et converge en forme de coin en direction de l'axe de rotation (D) de la denture de crabot, **en ce que** les génératrices (5a, 5b) de la tête en forme de toit et des flancs latéraux, dans la direction longitudinale des dents, sont des droites qui passent par l'axe de rotation (D).

2. Denture de crabot selon la revendication 1, **caractérisée en ce que** la tête en forme de toit (10e) définit un pignon triangulaire ou un pignon polygonal.

3. Denture de crabot selon la revendication 1, **caractérisée en ce que** la tête en forme de toit (10g), vu dans la direction transversale par rapport à l'axe longitudinal de la dent, définit une demi-ellipse ou une forme rectangulaire, le cas échéant avec un arrondi latéral.

4. Denture de crabot selon la revendication 1, **caractérisée en ce qu'**une partie des dents de l'un des éléments associés de la denture de crabot sont plus hautes d'une valeur de surhauteur par rapport aux autres dents.

5. Denture de crabot selon la revendication 4, **caractérisée en ce qu'**une dent sur deux est plus haute.

6. Denture de crabot selon la revendication 4, **caractérisée en ce que** la valeur de la tête en forme de toit correspond totalement ou en partie à la valeur de la surhauteur.

7. Denture de crabot selon la revendication 1, **caractérisée en ce qu'**une partie périphérique continue de la hauteur, qui forme le bord inférieur de la tête en forme de toit, est conformée en plat (8b, 9b, 10b).
